# EUROPEAN PATENT APPLICATION

(11) **EP 4 394 937 A1**
(43) Date of publication of application: **03.07.2024**
(21) Application number: 23769636.4
(22) Date of filing: 08.03.2023
(51) Int. Cl.: H01M 4/38, H01M 4/58, H01M 10/054, H01M 4/134, H01M 4/136

(54) **IRON-BASED COMPOSITE PHOSPHATE POSITIVE ELECTRODE MATERIAL AND PREPARATION METHOD THEREFOR, POSITIVE PLATE AND SODIUM ION BATTERY**

(30) Priority: 14.03.2022 CN 202210247605
(71) Applicant: HUBEI WANRUN NEW ENERGY TECHNOLOGY CO., LTD., Shiyan, Hubei 442500 (CN)
(72) Inventor: YANG, Jiaojiao, Shiyan, Hubei 442500 (CN); ZHAO, Along, Shiyan, Hubei 442500 (CN); ZHAO, Xu, Shiyan, Hubei 442500 (CN); WANG, Qin, Shiyan, Hubei 442500 (CN); CHEN, Zhongxue, Shiyan, Hubei 442500 (CN); WU, Honglun, Shiyan, Hubei 442500 (CN)
(74) Representative: Studio Torta S.p.A.
(86) International application number: PCT/CN2023/080342
(87) International publication number: WO 2023/174130

(57) **Abstract**

The present disclosure relates to the technical field of sodium ion battery materials, and in particular to an iron-based composite phosphate cathode material and a preparation method thereof, and a cathode plate and a sodium ion battery. The method for preparing an iron-based composite phosphate cathode material includes: uniformly mixing a sodium source, a phosphorus source, a carbon source, and water, and then mixing same with iron phosphate to obtain a first mixed system; and grinding the first mixed system to obtain a second mixed system, and then drying and sintering same. In the first mixed system, the total mass of Na element, Fe element, (PO₄)³⁻, and the carbon source is 30%-40% of the mass of the water; and the viscosity of the second mixed system is greater than or equal to 300 Pa.S. According to the method, a solid reactant can be solubilized during grinding to achieve a homogeneous reaction function, the drying and sintering are further performed to obtain the iron-based composite phosphate cathode material, and the material is uniformly sized nano spherical particles.

## Description

### Cross-Reference to Related Application

The disclosure claims priority to Chinese Patent Application No. CN20221 0247605.5 filed to the China National Intellectual Property Administration on March 14, 2022 and entitled "An Iron-Based Composite Phosphate Cathode Material and a Preparation Method thereof, and a Cathode Plate and a Sodium Ion Battery", the disclosure of which is hereby incorporated by reference in its entirety.

### Technical Field

The present disclosure relates to the technical field of sodium ion battery materials, and specifically to an iron-based composite phosphate cathode material and a preparation method thereof, and a cathode plate and a sodium ion battery.

### Background

In recent years, there has been a great deal of effort to develop clean energy sources such as solar, wind and hydroelectric power. However, these clean energy sources have disadvantages of large waviness, poor stability, intermittent supply, etc., and require the integration and conversion of large-scale energy storage apparatuses before these clean energy sources can be rationally utilized. Among existing energy storage technologies, secondary batteries are considered to be one of the ideal choices for large-scale energy storage technologies due to strong flexibility and high energy conversion efficiency. Although lithium ion batteries have achieved great success in portable electronic devices and electric vehicles due to high energy density and good cycling stability, due to the scarcity and uneven distribution of lithium resources, requirements for low costs of large-scale energy storage cannot be met. However, sodium ion batteries have a similar operating principle to the lithium ion batteries, and are more abundant and widely distributed. Considering that the characteristic of the value cost of large-scale energy storage apparatuses outweighs the energy density, the sodium ion batteries are considered as one of the potential candidates for large-scale energy storage systems.

At present, a large number of sodium ion battery cathode materials have been reported, and only a very small number of the materials have shown good electrochemical performance, such as vanadium-based phosphates, iron-based phosphates, and prussian blue analogs. In addition, during the process of commercialization of laboratory results, these materials also face some serious problems, such as the high toxicity and cost of vanadium-based materials, and the instability of structures of the prussian blue analogs. In the iron-based phosphates, Na₄Fe₃(PO₄)₂P₂O₇ combines all the advantages of the iron-based phosphates, which are low in cost, environmentally-friendly, high in theoretical capacity (129 mAh g⁻¹), high in average working voltage (3.1VS.Na⁺/Na), and low in volumetric expansion (4% less), and thus is considered as the most promising sodium ion battery cathode material. However, Na₄Fe₃(PO₄)₂P₂O₇ is often synthesized using water-soluble salts in the synthesis process, resulting in high process cost and serious pollution to environments by decomposition products, which is not conducive to industrialization from the consideration of the cost of raw material preparation. Therefore, finding a more economical preparation process will assist in batch production of the Na₄Fe₃(PO₄)₂P₂O₇.

### Summary

One objective of the present disclosure is to provide a method for preparing an iron-based composite phosphate cathode material. The viscosity of a solution is regulated and controlled by using an appropriate solid-liquid ratio to achieve solubilization of a solid reactant during grinding, so as to obtain a homogeneous reaction function, and then a final product is obtained through further drying and sintering.

Another objective of the present disclosure is to provide an iron-based composite phosphate cathode material, which is prepared by the method for preparing an iron-based composite phosphate cathode material.

Another objective of the present disclosure is to provide a cathode plate, including the cathode material.

Another objective of the present disclosure is to provide a sodium ion battery, including the cathode plate.

In order to implement the above objectives, the following technical solutions are used.

The present disclosure provides a method for preparing an iron-based composite phosphate cathode material, including the following steps.

A sodium source, a phosphorus source, a carbon source, and water are uniformly mixed, and then same are mixed with iron phosphate to obtain a first mixed system; and the first mixed system is ground to obtain a second mixed system, and then same are dried and sintered.

In the first mixed system, the total mass of Na, Fe, (PO₄)³⁻, and the carbon source is 30%-40% of the mass of the water; and the viscosity of the second mixed system is greater than or equal to 300 Pa.S.

Optionally, the sodium source includes at least one of sodium acetate, sodium nitrate, sodium oxalate, sodium citrate, or trisodium phosphate.

Optionally, the phosphorus source includes at least one of sodium phosphate monobasic, trisodium phosphate, or phosphoric acid.

Optionally, the carbon source includes at least one of citric acid, glucose, sucrose, or polyethylene glycol.

Optionally, a molar ratio of the phosphorus source, the sodium source, and the carbon source is 1:(2.8-3.2):(1-10).

Optionally, in the iron phosphate, a molar ratio of Fe to P is 0.97-1.

Optionally, the iron phosphate includes micron-sized particles and/or nano-sized agglomerates.

Optionally, in the second mixed system, the particle size D90 of the iron phosphate is 0.05-0.15 µm.

Optionally, the viscosity of the second mixed system 300-400 Pa.S.

Optionally, the drying includes spray drying.

Optionally, a drying temperature is 80-120 °C, and drying time is 5-10h.

Optionally, the sintering includes: performing first sintering processing at 290-310 °C, and heating a temperature to 550-600 °C for second sintering processing.

Optionally, the time for the first sintering processing is 3-5h, and the time for the second sintering processing is 10-12h.

Optionally, a heating rate of the heating is 2-5°C/min.

An iron-based composite phosphate cathode material is prepared by the method for preparing an iron-based composite phosphate cathode material.

Optionally, the iron-based composite phosphate cathode material is spherical particles, with the particle size being 100-200 nm.

The present disclosure further provides a cathode plate, including the cathode material.

The present disclosure further provides a sodium ion battery, including the cathode plate.

Compared with the related art, the present disclosure has the following beneficial effects.
(1) In the present disclosure, the viscosity of a solution is regulated and controlled by using an appropriate solid-liquid ratio to achieve solubilization of a solid reactant during grinding, so as to obtain a homogeneous reaction function, and then the iron-based composite phosphate cathode material is obtained through further drying and sintering. The material is uniformly sized nano spherical particles, with the particle size being 100-200 nm; and the material has excellent electrochemical performance.
(2) The iron-based composite phosphate cathode material prepared in the present disclosure is applied to the sodium ion battery, so as to further improve the cycle performance and safe performance of batteries.

### Brief Description of the Drawings

In order to more clearly illustrate the specific implementations of the present disclosure or the technical solutions in the related art, the drawings used in the description of the specific implementations or the related art will be briefly described below. It is apparent that the drawings in the following descriptions are some implementations of the present disclosure. Other drawings can be obtained from those skilled in the art according to these drawings without any creative work.
Fig. 1 is a Scanning Electron Microscope diagram (SEM diagram) of an iron-based composite phosphate cathode material obtained in Embodiment 1 of the present disclosure.
Fig. 2 is a charging and discharging curve of a battery prepared by an iron-based composite phosphate cathode material obtained in Embodiment 1 of the present disclosure.

### Detailed Description of the Embodiments

Implementation solutions of the present disclosure will be described in detail below in conjunction with embodiments, but it will be understood by those skilled in the art that the following embodiments are intended to illustrate the present disclosure only and should not be considered as limiting the scope of the present disclosure. If specific conditions are not indicated in the embodiments, the implementations are carried out in accordance with the conventional conditions or the conditions recommended by manufacturers. Reagents or instruments used are conventional products that may be purchased commercially if the manufacturers are not specified.

According to an aspect of the present disclosure, the present disclosure relates to a method for preparing an iron-based composite phosphate cathode material. The method includes the following steps.

A sodium source, a phosphorus source, a carbon source, and water are uniformly mixed, and then same are mixed with iron phosphate to obtain a first mixed system; and the first mixed system is ground to obtain a second mixed system, and then same are dried and sintered.

In the first mixed system, the total mass of Na, Fe, (PO₄)³⁻, and the carbon source is 30%-40% of the mass of the water; and the viscosity of the second mixed system is greater than or equal to 300 Pa.S.

In the present disclosure, the viscosity of a solution is regulated and controlled by using an appropriate solid-liquid ratio to achieve solubilization of a solid reactant during grinding, so as to obtain a homogeneous reaction function, and then the iron-based composite phosphate Na₄Fe₃(PO₄)₂P₂O₇ cathode material is obtained through further drying and sintering. The cathode material is uniformly sized nano spherical particles, with the particle size being 100-200 nm.

In an implementation, in the first mixed system, the total mass of Na element, Fe element, a phosphate radical (PO₄)³⁻, and the carbon source is 30%-40% of the mass of the water, specifically including, but not limited to, 31%, 32%, 33%, 34%, 35%, 36%, 37%, 38%, or 39%.

In an implementation, the viscosity of the second mixed system is greater than or equal to 300 Pa.S, specifically including, but not limited to, 310 Pa.S, 320 Pa.S, 330 Pa.S, 350 Pa.S, 360 Pa.S, 380 Pa.S, 400 Pa.S, 420 Pa.S, 450 Pa.S, or 500 Pa.S. In an implementation, the viscosity of the second mixed system 300-500 Pa.S.

The grinding refers to a manner of refining and dispersing the particles with a mechanical force. For example, a sanding manner is used; and media for sanding include at least one of sand, glass beads, zirconia beads, or zirconium silicate beads.

In an implementation, the sodium source includes at least one of sodium acetate, sodium nitrate, sodium oxalate, sodium citrate, or trisodium phosphate.

In an implementation, the phosphorus source includes at least one of sodium phosphate monobasic, trisodium phosphate, or phosphoric acid.

In an implementation, the carbon source includes at least one of citric acid, glucose, sucrose, or polyethylene glycol.

In an implementation, a molar ratio of the phosphorus source, the sodium source, and the carbon source is 1:(2.8-3.2):(1-10).

In an implementation, a molar ratio of the phosphorus source, the sodium source, and the carbon source is 1:3:1, 1:3:2, 1:3:3, 1:3:4, 1:3:5, 1:3:6, 1:3:7, or 1:3:10.

In an implementation, in the iron phosphate, a molar ratio of Fe to P is 0.97-1, for example, may be 0.98 or 0.99.

In an implementation, the iron phosphate is crystal or amorphous particles. The iron phosphate includes micron-sized particles and/or nano-sized agglomerates. A preferred type is the ano-sized agglomerates.

In an implementation, the particle size of the micron-sized particles of the iron phosphate is 1-20 µm, including, but not limited to, 2 µm, 3 µm, 5 µm, 6 µm, 7 µm, 10 µm, 11 µm, 13 µm, 15 µm, 17 µm, or 20 µm. In an implementation, the particle size of the nano-sized agglomerates of the iron phosphate is 20-200 nm, including, but not limited to, 25 nm, 30 nm, 35 nm, 40 nm, 45 nm, 50 nm, 70 nm, 80 nm, 100 nm, 120 nm, 150 nm, 170 nm, 180 nm, or 200 nm.

In an implementation, in the second mixed system, the particle size D90 of the iron phosphate is 0.05-0.15 µm. In an implementation, the particle size D90 of the iron phosphate is 0.06 µm, 0.07 µm, 0.08 µm, 0.09 µm, 0.1 µm, 0.11 µm, 0.12 µm, 0.13 µm, 0.14 µm, or 0.15 µm.

In an implementation, the drying includes spray drying.

In an implementation, a drying temperature is 80-120 °C, and drying time is 5-10h. In an implementation, the drying temperature is 85 °C, 90 °C, 95 °C, 100 °C, 105 °C, 110 °C, or 115 °C. The drying time is 6h, 7h, 8h, 9h, or 9.5h.

In an implementation, the sintering includes: performing first sintering processing at 290-310 °C, and heating a temperature to 550-600 °C for second sintering processing. In an implementation, the temperature for the first sintering processing is 292 °C, 295 °C, 298 °C, 300 °C, 302 °C, 305 °C, or 309 °C. In an implementation, the temperature for the second sintering processing includes, but is not limited to, 555 °C, 560 °C, 565 °C, 570 °C, 575 °C, 580 °C, 585 °C, 590 °C, 595 °C, or 600 °C.

In an implementation, the time for the first sintering processing is 3-5h, and the time for the second sintering processing is 10-12h. In an implementation, the time for the first sintering processing includes, but is not limited to, 3h, 3.5h, 4h, or 4.5h. The time for the second sintering processing includes, but is not limited to, 10.5h, 11h, or 11.5h.

Optionally, a heating rate of the heating is 2-5 °C/min, for example, may be 2.5°C/min, 3 °C/min, 4 °C/min, 4.5 °C/min.

In an implementation, sintering is performed under a protective gas condition. A protective gas includes nitrogen gas and inert gas. The inert gas includes argon gas, neon gas, etc.

In the present disclosure, through the above sintering condition, the iron-based composite phosphate cathode material with excellent electrochemical performance is further obtained.

According to another aspect of the present disclosure, the present disclosure further relates to an iron-based composite phosphate cathode material prepared by the method for preparing an iron-based composite phosphate cathode material.

In an implementation, the iron-based composite phosphate cathode material is spherical particles, with the particle size being 100-200 nm. In an implementation, the particle size of the iron-based composite phosphate cathode material includes, but is not limited to, 110 nm, 120 nm, 130 nm, 140 nm, 150 nm, 160 nm, 170 nm, 180 nm, 190 nm, or 200 nm.

According to another aspect of the present disclosure, the present disclosure further relates to a cathode plate, including the cathode material.

According to another aspect of the present disclosure, the present disclosure further relates to a sodium ion battery, including the cathode plate.

The battery of the present disclosure has excellent cycle performance and safe performance.

The present disclosure will be further explained below with reference to specific embodiments and comparative embodiments.

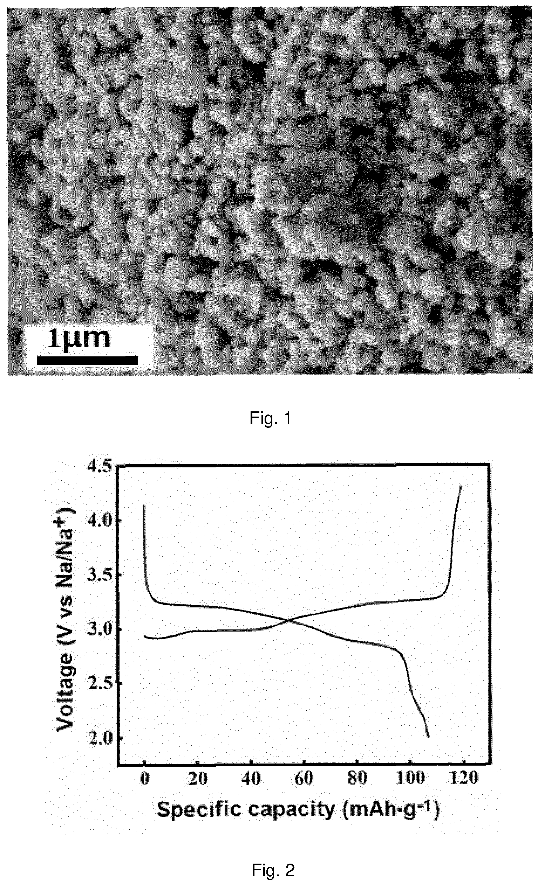

Fig. 1 is a Scanning Electron Microscope diagram (SEM diagram) of an iron-based composite phosphate cathode material obtained in Embodiment 1 of the present disclosure. Fig. 2 is a charging and discharging curve of a battery prepared by an iron-based composite phosphate cathode material obtained in Embodiment 1 of the present disclosure.

### Embodiment 1

A method for preparing an iron-based composite phosphate cathode material included the following steps.

Sodium phosphate monobasic, sodium acetate, and citric acid monohydrate were added to 5 Kg of deionized water in a molar ratio being 1:3:2, and the mixture continued to be stirred until a clear solution is formed; a proportion of an iron phosphate solid was taken and added to the clear solution, a total solid content was controlled at 35%, where the iron phosphate was nano-sized agglomerates, with particle size being 50-100 nm; then sanding was performed, with the dispersing of the iron phosphate in the solution, the viscosity of the solution gradually increased, and sanding was stopped when the viscosity of the solution reached 300 Pa.S; spray drying was performed on the solution for 8h, and a temperature of spray drying was 95 °C; then high-temperature calcination was performed in a N₂ atmosphere, and a heating rate was 2 °C/min; holding the mixture at 300 °C for 5h, and at 550 °C for 12h; and the iron-based composite phosphate cathode material was obtained after natural cooling.

Morphology of the material was analyzed through an SEM, as shown in Fig. 1, the material was uniformly sized nano spherical particles, with the particle size being 100-200 nm.

### Embodiment 2

A method for preparing an iron-based composite phosphate cathode material included the following steps.

Sodium phosphate monobasic, sodium acetate, and citric acid monohydrate were added to 5 Kg of deionized water in a molar ratio being 1 :3:5, and the mixture continued to be stirred until a clear solution is formed; a proportion of an iron phosphate solid was taken and added to the clear solution, a total solid content was controlled at 40%, where the iron phosphate was nano-sized agglomerates, with particle size being 20-95 nm; then sanding was performed, with the dispersing of the iron phosphate in the solution, the viscosity of the solution gradually increased, and sanding was stopped when the viscosity of the solution reached 350 Pa.S; spray drying was performed on the solution for 10h, and a temperature of spray drying was 120 °C; then high-temperature calcination was performed in a N₂ atmosphere, and a heating rate was 5 °C/min; holding the mixture at 300 °C for 4h, and at 600 °C for 10h; and the iron-based composite phosphate cathode material was obtained after natural cooling.

### Embodiment 3

A method for preparing an iron-based composite phosphate cathode material included the following steps.

Sodium phosphate monobasic, sodium acetate, and citric acid monohydrate were added to 5 Kg of deionized water in a molar ratio being 1 :3:10, and the mixture continued to be stirred until a clear solution is formed; a proportion of an iron phosphate solid was taken and added to the clear solution, a total solid content was controlled at 30%, where the iron phosphate was nano-sized agglomerates, with particle size being 75-95 nm; then sanding was performed, with the dispersing of the iron phosphate in the solution, the viscosity of the solution gradually increased, and sanding was stopped when the viscosity of the solution reached 400 Pa.S; spray drying was performed on the solution for 6h, and a temperature of spray drying was 80 °C; then high-temperature calcination was performed in a N₂ atmosphere, and a heating rate was 2.5 °C/min; holding the mixture at 290 °C for 4.5h, and at 585 °C for 11h; and the iron-based composite phosphate cathode material was obtained after natural cooling.

### Embodiment 4

In a method for preparing an iron-based composite phosphate cathode material, except that a sodium source was sodium oxalate, a phosphorus source was trisodium phosphate, a carbon source was glucose and citric acid, and a molar ratio of the sodium oxalate, the trisodium phosphate, the glucose, and the citric acid was 0.5:1:1:2.5, other conditions were the same as in Embodiment 1.

### Embodiment 5

In a method for preparing an iron-based composite phosphate cathode material, except that a sodium source was sodium citrate, a phosphorus source was phosphoric acid, a carbon source was polyethylene glycol, glucose and sucrose, and a molar ratio of the sodium citrate, the phosphoric acid, the polyethylene glycol, the glucose, and the sucrose was 1:1:0.1:1:1.5, other conditions were the same as in Embodiment 1.

### Comparative embodiment 1

In a method for preparing an iron-based composite phosphate cathode material, except that a total solid content was controlled at 25%, and sanding was stopped when the viscosity of the solution reached 250 Pa.S, other conditions were the same as in Embodiment 1.

### Comparative embodiment 2

In a method for preparing an iron-based composite phosphate cathode material, except that a total solid content was controlled at 45%, and sanding was stopped when the viscosity of the solution reached 280 Pa.S, other conditions were the same as in Embodiment 1.

### Experimental embodiment

The cathode materials in the embodiments and the comparative embodiments were weighed, and respectively mixed with acetylene black and PVDF, and a mass ratio of the cathode material, the acetylene black, and the PVDF was 70:20:10; and the mixture was coated on an aluminum foil with a diameter being 19 mm, and then vacuum drying was performed on the aluminum foil at 120 °C for 12 hours, so as to obtain a cathode plate. Metal sodium was used as a counter electrode, 1mol/L NaClO₄ ethylene carbonate/diethyl carbonate (a volume ratio being 1:1) was electrolyte, and a diaphragm was cellgard2035, a button cell was assembled in a glove box, and a model number of the cell was CR2016. A constant current charging and discharging test was performed on the cell, and a current density was 26 mA/g. Test results were shown in Fig. 2, and within a voltage range of 2.0-4.3V, a reversible specific capacity was 109 mAh/g.

Performance testing of batteries in the embodiments and comparative embodiments for primary effect and capacity retention was performed, and results were shown in Table 1.

**Table 1 Battery performance test result**

| Group | 0.2C charging (mAh/g) | 0.2C discharging (mAh/g) | First week efficiency (%) | 500-week retention rate (%) |
|---|---|---|---|---|
| Embodiment 1 | 118 | 109 | 92 | 98 |
| Embodiment 2 | 115 | 106 | 92 | 96 |
| Embodiment 3 | 120 | 112 | 93 | 96 |
| Comparative embodiment 1 | 92 | 90 | 98 | 89 |
| Comparative embodiment 2 | 99 | 96 | 97 | 90 |

From Table 1, it might be learned that, in the present disclosure, the viscosity of a solution was regulated and controlled by using an appropriate solid-liquid ratio to achieve solubilization of a solid reactant during grinding, so as to obtain a homogeneous reaction function, and the cathode material obtained through further drying and sintering had excellent primary effect and capacity retention. The solid-liquid ratio and solution viscosity of Comparative embodiment 1 and Comparative embodiment 2 did not fall within the scope of protection of the present disclosure, and the capacity retention of the obtained cathode material was far inferior to the capacity retention of the cathode material of the present application.

It is to be noted at last: the above various embodiments are only used to illustrate the technical solutions of the present disclosure and not used to limit the same. Although the present disclosure has been described in detail with reference to the foregoing embodiments, for those of ordinary skill in the art, they can still modify the technical solutions described in the foregoing embodiments, or equivalently replace part or all of the technical features; all these modifications and replacements shall not cause the essence of the corresponding technical solutions to depart from the scope of the technical solutions of the embodiments of the present disclosure.

## Claims

1. A method for preparing an iron-based composite phosphate cathode material, is characterized that the iron-based composite phosphate cathode material comprises the following steps:
uniformly mixing a sodium source, a phosphorus source, a carbon source, and water, and then mixing same with iron phosphate to obtain a first mixed system; and grinding the first mixed system to obtain a second mixed system, and then drying and sintering same;
in the first mixed system, the total mass of Na element, Fe element, (PO₄)³⁻ and the carbon source is 30%-40% of the mass of the water; and the viscosity of the second mixed system is greater than or equal to 300 Pa.S.

2. The method for preparing an iron-based composite phosphate cathode material according to claim 1, is characterized that the sodium source comprises at least one of sodium acetate, sodium nitrate, sodium oxalate, sodium citrate and trisodium phosphate;
preferably, the phosphorus source comprises at least one of sodium phosphate monobasic, trisodium phosphate and phosphoric acid;
preferably, the carbon source comprises at least one of citric acid, glucose, sucrose and polyethylene glycol; and
preferably, a molar ratio of the phosphorus source, the sodium source, and the carbon source is 1:(2.8-3.2):(1-10).

3. The method for preparing an iron-based composite phosphate cathode material according to claim 1, is characterized that in the iron phosphate, a molar ratio of Fe to P is 0.97-1; and
preferably, the iron phosphate comprises micron-sized particles and/or nano-sized agglomerates.

4. The method for preparing an iron-based composite phosphate cathode material according to claim 1, is characterized that in the second mixed system, the particle size D90 of the iron phosphate is 0.05-0.15 µm.

5. The method for preparing an iron-based composite phosphate cathode material according to claim 1, is characterized that the viscosity of the second mixed system 300-400 Pa.S.

6. The method for preparing an iron-based composite phosphate cathode material according to claim 1, is characterized that the drying comprises spray drying; and
preferably, the drying temperature is 80-120 °C, and the drying time is 5-10h.

7. The method for preparing an iron-based composite phosphate cathode material according to claim 1, is characterized that the sintering comprises: performing first sintering processing at 290-310 °C, and heating a temperature to 550-600 °C for second sintering processing;
preferably, the time for the first sintering processing is 3-5h, and the time for the second sintering processing is 10-12h; and
preferably, the heating rate of the heating is 2-5 °C/min.

8. An iron-based composite phosphate cathode material, prepared by the method for preparing an iron-based composite phosphate cathode material according to any one of claims 1 to 7, is characterized that,
preferably, the iron-based composite phosphate cathode material is spherical particles, with the particle size being 100-200 nm.

9. A cathode plate, is characterized that the cathode plate comprises the iron-based composite phosphate cathode material according to claim 8.

10. A sodium ion battery, is characterized that the sodium ion battery comprises the cathode plate according to claim 9.
